(19) Europäisches Patentamt / European Patent Office / Office européen des brevets

(11) **EP 4 143 962 B1**

(12) **EUROPÄISCHE PATENTSCHRIFT**

(45) Veröffentlichungstag und Bekanntmachung des Hinweises auf die Patenterteilung:
**28.05.2025  Patentblatt 2025/22**

(21) Anmeldenummer: **21722427.8**

(22) Anmeldetag: **27.04.2021**

(51) Internationale Patentklassifikation (IPC):
**H02P 6/08** *(2016.01)*   **H02P 29/62** *(2016.01)*

(52) Gemeinsame Patentklassifikation (CPC):
**H02P 6/085; H02P 29/62;** Y02T 10/12

(86) Internationale Anmeldenummer:
**PCT/EP2021/061012**

(87) Internationale Veröffentlichungsnummer:
**WO 2021/219657 (04.11.2021 Gazette 2021/44)**

(54) **ELEKTRISCHE SCHALTUNG FÜR EINEN ELEKTRISCHEN MOTOR**

ELECTRIC CIRCUIT FOR AN ELECTRIC MOTOR

CIRCUIT ELECTRIQUE POUR MOTEUR ELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2020  DE 102020111778**

(43) Veröffentlichungstag der Anmeldung:
**08.03.2023  Patentblatt 2023/10**

(73) Patentinhaber: **GKN Sinter Metals Engineering GmbH**
**42477 Radevormwald (DE)**

(72) Erfinder: **ANDREE, Maurice**
**47506 Neukirchen-Vluyn (DE)**

(74) Vertreter: **karo IP**
**Patentanwälte PartG mbB**
**Steinstraße 16-18**
**40212 Düsseldorf (DE)**

(56) Entgegenhaltungen:
**WO-A1-02/071809    DE-A1- 102018 104 418**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine elektrische Schaltung für einen elektrischen Motor. Der elektrische Motor umfasst zumindest einen Stator sowie einen Rotor. Insbesondere ist der elektrische Motor ein Axialflussmotor (AFM).

Es sind Anwendungen bekannt, bei denen neben einer Antriebsleistung eines elektrischen Motors auch eine Heizleistung des elektrischen Motors genutzt werden kann. Z. B. kann bei der Förderung einer Harnstoff-Wasser-Lösung (z. B. Adblue), die zur Abgasbehandlung eingesetzt wird, ein Beheizen der Harnstoff-Wasser-Lösung gewünscht sein. Der zum Antrieb einer Pumpe eingesetzte elektrische Motor generiert auch Wärme, die z. B. zum Auftauen der Harnstoff-Wasser-Lösung eingesetzt werden kann.

Aus der WO 2019/170738 A1 ist ein Verfahren zum Betreiben eines elektrischen Motors bekannt, der in zumindest zwei Zuständen betrieben werden kann. In einem ersten Zustand werden die Spulen mit jeweils unterschiedlichen elektrischen Strömen eines drei-Phasen-Drehstromsystems betrieben und der Rotor in Drehung um eine Drehachse versetzt. In einem zweiten Zustand werden die Spulen mit einem gleichphasigen Wechselstrom betrieben. Der in dem zweiten Zustand verwendete gleichphasige Wechselstrom ermöglicht z. B. ein gezieltes Beheizen von Bauteilen eines Gehäuses des Motors.

Üblicherweise werden zur Erzeugung dieser zwei Zustände zwei verschiedene und voneinander getrennt ausgeführte bzw. unabhängig voneinander betreibbare elektrische Schaltungen verwendet. Dies wird als erforderlich angesehen, um die unterschiedlichen Anforderungen in Bezug auf bereitgestellte elektrische Spannung und Frequenz zu erfüllen.

Dabei wird für den ersten Zustand insbesondere ein niederfrequentes Drehfeld, beispielsweise von weniger als 1.000 Hz [Hertz], zwischen den Potentialanschlüssen der elektrischen Schaltung erzeugt. Für den zweiten Zustand ist die Erzeugung eines hochfrequenten, beispielsweise von mindestens 5 kHz, gleichphasigen Wechselstroms zwischen den Potentialanschlüssen erforderlich.

Aus der DE 10 2018 104 418 A1 sind ein elektromagnetisch betätigter Aktor für eine elektrische Maschine und eine elektrische Maschine mit elektromagnetisch betätigtem Aktor bekannt.

Die WO 02/071809 A1 ist auf eine Vorrichtung zur zeitlichen parallelen Erwärmung durch Induktion und zum Rühren einer Metallschmelze gerichtet. Hiervon ausgehend ist es Aufgabe der vorliegenden Erfindung, die mit Bezug auf den Stand der Technik geschilderten Probleme zumindest zu lindern oder gar zu lösen. Insbesondere soll eine elektrische Schaltung vorgeschlagen werden, mit der ein elektrischer Motor gezielt zur Generierung einer Heizleistung betrieben werden kann.

Zur Lösung dieser Aufgaben wird eine elektrische Schaltung gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird eine elektrische Schaltung für einen elektrischen Motor vorgeschlagen, wobei der elektrische Motor zumindest einen ersten Stator mit zumindest drei (oder einem Vielfachen von drei) Spulen und einen Rotor mit zumindest zwei Magnetpolen aufweist. Der Motor ist durch die elektrische Schaltung zumindest in den folgenden zwei Zuständen betreibbar:

a) in einem ersten Zustand sind die Spulen mit jeweils unterschiedlichen (elektrischen) Strömen eines drei-Phasen-Drehstromsystems (also die einzelnen Ströme sind jeweils um einen Phasenwinkel zueinander versetzt) beaufschlagbar und der Rotor in Drehung um eine Drehachse versetzbar;
b) in einem zweiten Zustand sind die Spulen mit einem gleichphasigen Wechselstrom beaufschlagbar.

Die elektrische Schaltung weist zumindest einen ersten Potentialanschluss und einen zweiten Potentialanschluss auf, die mit unterschiedlichen Potentialen (z. B. Pluspol und Masse) einer Gleichspannungsquelle verbindbar bzw. verbunden sind. Die elektrische Schaltung umfasst zwischen den Potentialanschlüssen drei Halbbrücken, wobei jede Spule über jeweils einen ersten Anschluss mit jeweils einer Halbbrücke und über jeweils einen zweiten Anschluss mit den anderen Spulen elektrisch leitend verbindbar bzw. verbunden ist. Die elektrische Schaltung weist zwischen den Potentialanschlüssen eine vierte Halbbrücke auf, die mit einem die zweiten Anschlüsse verbindenden Sternpunkt elektrisch leitend verbindbar bzw. verbunden ist.

Der elektrische Motor kann insbesondere auch als Generator betrieben werden. Die Ausführungen zu dem Motor gelten entsprechend für den Betrieb als Generator.

Der Stator und der Rotor sind insbesondere entlang einer axialen Richtung nebeneinander und koaxial zueinander angeordnet. Die Spulen sind entlang einer Umfangsrichtung (auf einem gemeinsamen Durchmesser) nebeneinander angeordnet. Damit wird insbesondere ein Axialflussmotor ausgebildet, bei dem der magnetische Fluss zwischen den Spulen und den Magnetpolen parallel zur Drehachse entlang einer axialen Richtung verläuft. Es sind insbesondere aber auch andere Bauformen des elektrischen Motors möglich und in Kombination der elektrischen Schaltung verwendbar.

Insbesondere ist der elektrische Motor ein BLDC, also ein Bürstenloser Gleichstrommotor, bei dem der feststehende Stator die Spulen und der drehbare Rotor Permanentmagneten umfasst.

Insbesondere erfolgt die Leistungsaufnahme des elektrischen Motors in dem zweiten Zustand (zeitweise bzw. zu vorgebbaren Zeiträumen) ausschließlich zum Aufheizen eines Körpers. Der Körper ist insbesondere beabstandet von dem Stator und dem Rotor angeordnet.

Zudem kann eine Leistungsaufnahme (zeitweise bzw. zu vorgebbaren Zeiträumen) der elektrischen Schaltung zusätzlich oder auch ausschließlich zum Antreiben des Rotors erfolgen, so dass der Rotor mit einer Drehzahl von mehr als null ("0") Umdrehungen pro Minute um eine Drehachse rotiert.

In dem zweiten Zustand soll bzw. kann (vorrangig bzw. im Wesentlichen nur) ein Körper insbesondere mittels Induktion erwärmt werden. Der Körper kann z. B. ein Gehäuse (oder einen Teil davon) des elektrischen Motors ausbilden. Der Körper kann eine Leitung für ein Fluid ausbilden, so dass über den Körper ein Fluid erwärmt werden kann. Der Körper kann z. B. eine Welle sein. Über eine Welle kann z. B. ein Pumpensatz, von dem die Welle ein Bestandteil ist, erwärmt werden. Über die Welle kann damit z. B. ein durch den Pumpensatz zu förderndes Fluid erwärmt werden.

Bei der Erwärmung durch Induktion entsteht die Wärme unmittelbar im Körper selbst, muss also nicht durch Wärmeleitung übertragen werden. Die Heizleistung ist gut steuerbar. Zur induktiven Erwärmung wird durch die elektrische Schaltung ein hochfrequenter (gleichphasiger) Wechselstrom erzeugt und damit der Stator beaufschlagt, bzw. in den Spulen des Stators ein magnetisches Wechselfeld erzeugt, das im Material des Körpers Wirbelströme erzeugt. Induktive Erwärmung kann auch durch nichtleitende Materialien (z. B. eine Wand, ein Gehäuse, etc.) hindurch erfolgen. Die Umgebung wird nur indirekt (insbesondere aufgrund von Wärmestrahlung bzw. -leitung ausgehend vom induktiv erhitzten Körper) erwärmt.

Der Stator des elektrischen Motors weist insbesondere ein weichmagnetisches Material auf, zum Beispiel ein sogenanntes "Soft Magnetic Composite" (SMC), oder eine Kombination aus Elektroblechen und SMC. Die Spulen des Stators umfassen Kerne, die bevorzugt aus einem weichmagnetischen Material verpresst und verbackt hergestellt sind. Das SMC-Material wird hierbei nicht gesintert. Vielmehr erfolgt eine Temperierung auf unterhalb einer Schmelztemperatur, die jedoch ausreichend ist, dass die Kerne ihre Geometrie dauerhaft bewahren.

Der Rotor weist insbesondere Permanentmagnete und/oder weichmagnetische Elemente bzw. Magnetpole zum Beispiel in Aussparungen auf. Bevorzugt kann mit Permanentmagneten ein permanenterregter Synchron- oder bürstenloser Gleichstrommotor, abgekürzt BLDC, gebildet werden, während beispielsweise mit weichmagnetischen Elementen ein Reluktanzmotor als elektrischer Motor geschaffen werden kann.

Der Aufbau eines Stators, insbesondere unter Nutzung von SMC, sowie weitere Einzelheiten auch betreffend einen Rotor gehen beispielsweise aus der WO 2016/066714 A1 hervor.

Der elektrische Motor weist insbesondere eine elektrische Leistungsaufnahme für den ersten Zustand (also eine maximale Antriebsleistung) von weniger als 1.000 Watt (Nennleistung), bevorzugt von weniger als 500 Watt, besonders bevorzugt von weniger als 100 Watt auf.

Insbesondere erfolgt eine Leistungsaufnahme des elektrischen Motors einerseits zum Antreiben des Rotors (erster Zustand), so dass der Rotor mit einer Drehzahl von mehr als "0" Umdrehungen pro Minute um eine Drehachse rotiert. Andererseits erfolgt eine Leistungsaufnahme des elektrischen Motors zum Aufheizen eines Körpers (zweiter Zustand).

Insbesondere kann der elektrische Motor durch die elektrische Schaltung in beiden Zuständen betrieben werden, so dass ein Antrieb des Rotors durch den Betrieb des elektrischen Motors in dem ersten Zustand und zeitlich parallel ein Erwärmen eines Körpers durch den Betrieb des elektrischen Motors in dem zweiten Zustand erfolgt.

Zeitlich parallel heißt hier insbesondere, dass innerhalb eines Zeitintervalls (z. B. eine Sekunde) zwischen dem ersten Zustand und dem zweiten Zustand (insbesondere immer wieder hin und her) gewechselt wird, ggf. für unterschiedlich lange Teilintervalle des Zeitintervalls.

Die auf den Körper übertragene Heizleistung ist insbesondere die elektrische Leistung [in Watt], die durch die elektrische Schaltung während des Betriebs im zweiten Zustand zur Verfügung gestellt wird.

Bevorzugt wird dem zweiten Zustand (praktisch) keine elektrische Leistung zum Antrieb des Rotors verwendet. Insbesondere beträgt also trotz einer Leistungsaufnahme des elektrischen Motors die Drehzahl des Rotors "0" Umdrehungen pro Minute.

Insbesondere wird der elektrische Motor in dem zweiten Zustand nicht beschleunigt. Das heißt insbesondere, dass eine Drehzahl größer null Umdrehungen pro Minute des Rotors vorliegen kann, dass aber der Rotor durch die ausschließlich zur Umwandlung in Wärme eingesetzte elektrische Leistung nicht beschleunigt wird.

Eine übliche elektrische Schaltung zum Antrieb eines elektrischen Motors umfasst regelmäßig einen ersten Potentialanschluss und einen zweiten Potentialanschluss, die mit unterschiedlichen Potentialen (z. B. Pluspol und Masse) einer Gleichspannungsquelle verbindbar sind, wobei zwischen den Potentialanschlüssen drei Halbbrücken vorgesehen sind, wobei jede Spule des elektrischen Motors über jeweils einen ersten Anschluss mit jeweils einer Halbbrücke und über jeweils einen zweiten Anschluss mit den anderen Spulen elektrisch leitend verbindbar ist.

Die drei Halbbrücken der elektrischen Schaltung ermöglichen die Erzeugung eines drei-Phasen-Drehstromsystems oder von mehrphasigen Rechteckströmen, wobei die Phasen zueinander um 120 Winkelgrad versetzt sind. Jeder Strom bzw. Phasenstrom wird über jeweils einen ersten Anschluss auf eine Spule übertragen bzw. in eine Spule eingeprägt. Die Spulen sind untereinander über zweite Anschlüsse miteinander verbunden, wobei sich die unterschiedlichen Phasenströme im Sternpunkt gegenseitig aufheben, so dass kein separater bzw. zusätzlicher Rückleiter zum jeweils anderen Potentialanschluss erforderlich ist.

Eine Halbbrücke umfasst insbesondere in bekannter Weise eine Anordnung eines oberen Transistors und eines unteren Transistors, über die die Potentialanschlüsse miteinander verbunden sind. Zu jedem Transistor ist insbesondere eine Diode parallelgeschaltet.

Die Ergänzung der bekannten elektrischen Schaltung durch nur eine weitere Halbbrücke und durch deren Verbindung mit dem Sternpunkt führt zu einer nur geringen Vergrößerung der bekannten elektrischen Schaltung. Dabei ermöglicht diese vierte Halbbrücke und ihre vorteilhafte Anordnung jedoch bereits die zusätzliche Realisierung des zweiten Zustands.

Erfindungsgemäß weist jede Halbbrücke zumindest einen oberen Transistor (highside transistor) und einen unteren Transistor (low-side transistor) auf, die miteinander elektrisch leitend verbunden sind. Der obere Transistor ist mit dem ersten Potentialanschluss und der untere Transistor mit dem zweiten Potentialanschluss elektrisch leitend verbunden. Jede Halbbrücke weist zwischen dem oberen Transistor und dem unteren Transistor eine Kontaktierung auf, über die der jeweils eine Anschluss mit der jeweiligen Halbbrücke verbindbar ist.

Jeder erste Anschluss, der z. B. am elektrischen Motor angeordnet ist, ist also mit jeweils einer der ersten, zweiten oder dritten Halbbrücke über die Kontaktierung elektrisch leitend verbunden. Die zweiten Anschlüsse bzw. der Sternpunkt, die z. B. am elektrischen Motor angeordnet sind, sind über die Kontaktierung mit der vierten Halbbrücke verbunden.

Erfindungsgemäß ist die elektrische Schaltung zur Erzeugung des zweiten Zustands so betreibbar, dass einerseits (in einem ersten Schaltungszustand) die oberen Transistoren der ersten Halbbrücke, der zweiten Halbbrücke und der dritten Halbbrücke synchron (also zeitlich parallel) den ersten Potentialanschluss mit dem jeweiligen ersten Anschluss elektrisch leitend verbinden während die unteren Transistoren dieser Halbbrücken die jeweiligen ersten Anschlüsse von dem zweiten Potentialanschluss (elektrisch) trennen. Synchron dazu verbindet der untere Transistor der vierten Halbbrücke den zweiten Anschluss mit dem zweiten Potentialanschluss elektrisch leitend. Andererseits (in einem zweiten Schaltungszustand) verbinden die unteren Transistoren der ersten Halbbrücke, der zweiten Halbbrücke und der dritten Halbbrücke synchron den zweiten Potentialanschluss mit dem jeweiligen ersten Anschluss elektrisch leitend während die oberen Transistoren dieser Halbbrücken die jeweiligen ersten Anschlüsse von dem ersten Potentialanschluss (elektrisch) trennen. Synchron dazu verbindet der obere Transistor der vierten Halbbrücke den zweiten Anschluss mit dem ersten Potentialanschluss elektrisch leitend. Wenn also ein gleichphasiger Strom im Heizbetrieb (zweiter Zustand) vorliegen soll, liegen alle ersten Anschlüsse auf demselben Potential. In diesem Fall kann eine Potentialdifferenz nur durch das Hinzufügen eines zusätzlichen Rückleiters, hier also über die vierte Halbbrücke, erzeugt werden.

Diese Schaltungszustände werden insbesondere zeitlich nacheinander realisiert.

In diesen Schaltungszuständen des zweiten Zustands ist der Sternpunkt über die vierte Halbbrücke mit jeweils einem Potentialanschluss elektrisch leitend verbunden, so dass an jeder Spule in beiden Schaltungszuständen eine elektrische Potentialdifferenz vorliegt. Da die oberen oder die unteren Transistoren der ersten, zweiten und dritten Halbbrücke gleichzeitig und gleichartig schalten, liegt nur ein ein-phasiger Strom vor. Über den Wechsel zwischen den Schaltungszuständen wird ein Wechselstrom erzeugt.

Erfindungsgemäß umfasst die elektrische Schaltung mindestens einen Kondensator, über den der Sternpunkt mit der vierten Halbbrücke verbindbar ist. Der Kondensator ist im Betrieb des elektrischen Motors zwischen Sternpunkt und der vierten Halbbrücke angeordnet.

Der mindestens eine Kondensator ist insbesondere in einer Reihenschaltung zwischen dem elektrischen Motor und der vierten Halbbrücke angeordnet.

Alternativ ist der mindestens eine Kondensator in einer Parallelschaltung zwischen dem ersten Anschluss und dem zweiten Anschluss angeordnet. Insbesondere wird zu jeder Phase ein oder mehrere Kompensationskondensatoren parallel geschaltet, insbesondere jeweils zwischen erstem und zweitem Anschluss der Spule bzw. der Spulen, die zu einer Phase zusammengeschaltet sind. Dabei ist zu beachten, dass falls das PWM-Signal, das zur Stromformerzeugung im ersten Zustand genutzt wird, eine ähnliche Frequenz wie die Heizfrequenz besitzt, ein Stromglättungseffekt der Motorinduktivität außer Kraft gesetzt wird und somit eine gezielte Stromformerzeugung nicht mehr möglich ist. Um diese Problematik zu umgehen, sollten die PWM-Frequenz und die Heizfrequenz weit auseinander liegen

Insbesondere ist eine Kapazität des mindestens einen Kondensators in Abhängigkeit von einer Induktivität der Spulen des Motors ausgewählt, so dass bei Betreiben des Motors eine Blindleistung zumindest teilweise kompensierbar ist.

Ohne den mindestens einen Kondensator wäre die erzeugbare Heizleistung z. B. bei Niedrigspannungssystemen, z. B. in automobilen Anwendungen, insbesondere nur begrenzt realisierbar, da der Spulenstrom aufgrund der hohen Impedanz der Spulen bei hohen Frequenzen des Wechselstroms begrenzt ist. Dabei steigt die Impedanz einer Spule proportional mit der Frequenz gemäß Z = j 2 π f L an, wobei

Z: Impedanz einer Spule
j: imaginäre Einheit
f: Frequenz des Wechselstroms
L: Induktivität der Spule

Da die Anschlusspotentiale der elektrischen Schaltung mit einer Gleichspannungsquelle (im Generatorbetrieb dann mit einer Senke) verbunden sind, müsste durch diese eine entsprechend hohe Spannung zur Verfügung gestellt werden. Gerade in automobilen Anwendungen mit geringen Bordnetzspannungen, ist das jedoch nicht realisierbar. Insbesondere kann eine Blindleistungskompensation durch das Erreichen eines Resonanzzustandes mittels Anordnung des mindestens einen Kondensators erreicht werden. In diesem Fall kann die benötigte Spannung zwischen den Potentialanschlüssen auch mit einer deutlich geringeren Gleichspannung erzeugt werden.

Die über einer Spule abfallende Strangspannung des elektrischen Motors lässt sich im Allgemeinen durch die Multiplikation der Spulenimpedanz mit dem Phasenstrom ermitteln:

$$\underline{U} = \underline{Z} \cdot \underline{I}$$

Dabei kann die Spulenimpedanz immer durch einen frequenzunabhängigen Realteil und einen frequenzabhängigen Imaginärteil beschrieben werden. Unter Berücksichtigung von parasitären Komponenten und weiteren frequenzabhängigen Effekten bzw. Verlustmechanismen ergibt sich ein komplizierter Zusammenhang zwischen Strom und Spannung. Die Impedanz lässt sich jedoch in guter Näherung als vereinfachter Zusammenhang für beide Zustände darstellen. Im ersten Zustand bildet der ohmsche Drahtwiderstand eines Spulenstrangs den Realteil der Impedanz, während sich das induktive Verhalten durch den Imaginärteil der Impedanz ausdrücken lässt. Die Strangspannung (Spannung zwischen dem ersten Anschluss und dem zweiten Anschluss, also über eine Spule abfallende Spannung) kann für diesen ersten Zustand mittels folgender Formel berechnet werden:

$$\underline{U} = \underline{I} \cdot (R_i + \mathrm{j}2\pi f L_i) \, ,$$

wobei

U: Strangspannung, also Spannung zwischen dem jeweilig über die ersten Anschlüsse elektrisch leitend verbundenen Potentialanschluss und dem zweiten Anschluss
1: elektrischer Strom, mit dem der elektrische Motor beaufschlagt wird;
$R_i$: Widerstand der jeweiligen Spule, bzw. des durch die Spule verlaufenden Strompfades

j: imaginäre Einheit
f: Frequenz des Wechselstroms
$L_i$: Induktivität der jeweiligen Spule

Für den zweiten Zustand ist diese Beschreibung der Spulenimpedanz hingegen insbesondere nicht ausreichend. Die im Körper entstehenden Eisenverluste sollten genauer berücksichtigt werden. Die Spule bzw. der magnetische Kreis wird verlustbehaftet, so dass ein zusätzlicher Anteil im Realteil definiert werden kann, auf den die im Körper entstehenden Wirkleistungsverluste zurückführbar sind. Aufgrund der Gleichphasigkeit können die Motorstränge in diesem Zustand als Parallelschaltung betrachtet werden, sodass die Strangspannung für den zweiten Zustand in guter Näherung durch die folgende Gleichung ausgedrückt werden kann:

$$\underline{U} = \underline{I} \cdot \left( \frac{R_i}{3} + R_v + \mathrm{j}2\pi f \frac{L_i}{3} \right)$$

, wobei

$R_v$: Widerstand zur Beschreibung des Verlustanteils im zweiten Zustand

Die Anordnung des mindestens einen Kondensators verändert die oben angeführte Gleichung wie folgt:

$$\underline{U} = \underline{I} \cdot \left[ \frac{R_i}{3} + R_v + j\left( 2\pi f \frac{L_i}{3} - \frac{1}{2\pi f C} \right) \right]$$

, wobei

C: Kapazität des mindestens einen Kondensators

Dabei sollte die Kapazität des mindestens einen Kondensators so gewählt werden, dass gilt:

$$2\pi f \frac{L_i}{3} = \frac{1}{2\pi f C}$$

Damit kann der imaginäre und frequenzabhängige Anteil insbesondere vollständig kompensiert werden und der Spannungsbedarf drastisch reduziert werden, so dass gilt:

$$\underline{U} = \underline{I} \cdot \left( \frac{R_i}{3} + R_v \right)$$

Aufgrund der hohen Strangspannung des elektrischen Motors, also die Spannung zwischen den ersten Anschlüssen und den zweiten Anschlüssen, sollte bei der Dimensionierung des mindestens einen Kondensators eine ausreichend hohe Spannungsfestigkeit sowie eine möglichst geringe ESR (equivalent series resistance) zur Reduzierung der Kompensationsverluste berücksichtigt werden. Weiter ist eine Frequenzstabilität in Abhängigkeit von einer Temperatur zu gewährleisten, da z. B. Kondensatoren in Abhängigkeit von einer Temperatur eine Veränderung ihrer Kapazität erfahren aber auch Kerne der Spulen sich temperaturabhängig verhalten können. Wird der Resonanzzustand verstimmt, d. h. die Kapazität ändert sich z. B. mit der Temperatur, wird eine andere Frequenz benötigt, um die Verlustleistung zu maximieren. In diesem Fall kann über eine Steuereinheit, z. B. einen Mikroprozessor, die Frequenz nachjustiert werden. Eine Messung des Stroms, z. B. über Shunt Widerstände (in der Regel Low-Side-Shunts), kann genutzt werden, um den Strom und somit die Verluste zu maximieren. Es kann also insbesondere abwechselnd ein Strom gemessen und eine Frequenz angepasst werden, wobei diese Schritte mehrfach wiederholt werden können.

Es wird weiter ein Verfahren zum Betreiben eines elektrischen Motors mit der beschriebenen elektrischen Schaltung vorgeschlagen. Der Motor wird zur Erzeugung des ersten Zustands ausschließlich über die erste Halbbrücke, die zweite Halbbrücke und die dritte Halbbrücke betrieben.

Insbesondere ist während des ersten Zustands der Sternpunkt über die vierte Halbbrücke nur mit einem Potentialanschluss elektrisch leitend verbunden oder von beiden Potentialanschlüssen (elektrisch) getrennt (also schwebend angeordnet).

Insbesondere weist jede Halbbrücke zumindest einen oberen Transistor und einen unteren Transistor auf, die miteinander elektrisch leitend verbunden sind; wobei der obere Transistor mit dem ersten Potentialanschluss und der untere Transistor mit dem zweiten Potentialanschluss elektrisch leitend verbunden ist. Jede Halbbrücke weist zwischen dem oberen Transistor und dem unteren Transistor eine Kontaktierung auf, über die der jeweils eine Anschluss mit der jeweiligen Halbbrücke verbunden ist. Zur Erzeugung des zweiten Zustands werden:

- einerseits die oberen Transistoren der ersten Halbbrücke, der zweiten Halbbrücke und der dritten Halbbrücke synchron geschaltet und der erste Potentialanschluss mit dem jeweiligen ersten Anschluss elektrisch leitend verbunden, während die unteren Transistoren dieser Halbbrücken (synchron geschaltet sind und) die jeweiligen ersten Anschlüsse von dem zweiten Potentialanschluss trennen; wobei synchron dazu der untere Transistor der vierten Halbbrücke geschaltet wird zur Verbindung des zweiten Anschlusses mit dem zweiten Potentialanschluss; und
- andererseits die unteren Transistoren der ersten Halbbrücke, der zweiten Halbbrücke und der dritten Halbbrücke synchron geschaltet und der zweite Potentialanschluss mit dem jeweiligen ersten Anschluss elektrisch leitend verbunden, während die oberen Transistoren dieser Halbbrücken (synchron geschaltet sind und) die jeweiligen ersten Anschlüsse von dem ersten Potentialanschluss trennen; wobei synchron dazu der obere Transistor der vierten Halbbrücke geschaltet wird zur Verbindung des zweiten Anschlusses mit dem ersten Potentialanschluss.

Das drei-Phasen-Drehstromsystem des ersten Zustands wird in bekannter Weise durch die gesteuerte Schaltung der ersten, zweiten und dritten Halbbrücke erzeugt.

Insbesondere weist eine erste Frequenz des Drehstromsystems höchstens 50 %, bevorzugt höchstens 10 %, besonders bevorzugt höchstens 2 %, einer zweiten Frequenz des Wechselstroms auf.

Die erste Frequenz des Drehstromsystems (also die Anzahl von Perioden einer Phase des Drehstromsystems pro Sekunde) beträgt insbesondere höchstens 1.000 Hz, insbesondere höchstens 500 Hz.

Die zweite Frequenz des Wechselstroms (wobei je Periode zwei Potentialwechsel vorliegen) beträgt insbesondere mindestens 5 kHz, bevorzugt mindestens 10 kHz, besonders bevorzugt mindestens 15 kHz.

Insbesondere beträgt eine im zweiten Zustand durch die elektrische Schaltung erzeugbare höchste Heizleistung mindestens 50 %, bevorzugt mindestens 100 %, besonders bevorzugt mindestens 200 %, einer im ersten Zustand durch die elektrische Schaltung erzeugbaren Antriebsleistung.

Insbesondere ist eine im zweiten Zustand durch die elektrische Schaltung erzeugbare höchste Heizleistung um einen Faktor von mindestens fünf, bevorzugt mindestens 10, besonders bevorzugt mindestens 25 oder sogar mindestens 45, höher ist als eine im ersten Zustand durch die elektrische Schaltung erzeugbare Antriebsleistung.

Beträgt also eine elektrische Leistungsaufnahme für den ersten Zustand (also eine maximale Antriebsleistung) bis zu 1.000 Watt (Nennleistung), kann eine Leistungsaufnahme für den zweiten Zustand mindestens bis 5 kW [Kilowatt], 10 kW, 25 kW oder sogar 45 kW betragen.

Insbesondere wird die elektrische Schaltung in voneinander unterschiedlichen Zeitintervallen entweder zur Erzeugung des ersten Zustands oder zur Erzeugung des zweiten Zustands betrieben.

Insbesondere erfolgt eine Umschaltung zwischen den Zeitintervallen in einer dritten Frequenz von mehr als ein ("1") Hz, insbesondere von mehr als 5 Hz, bevorzugt von mehr als 20 Hz und besonders bevorzugt von mehr als 100 Hz.

Insbesondere können die dem jeweiligen Zustand zugeordneten Zeitintervalle unterschiedlich lang sein. Insbesondere sind erste Zeitintervalle, in denen der Motor in dem ersten Zustand betrieben wird, länger, z. B. um mindestens 10 %, mindestens 20 % oder mindestens 40 %, als zweite Zeitintervalle, in denen der Motor in dem zweiten Zustand betrieben wird.

Insbesondere können so die zeitlichen Anteile, in denen ein Motor in dem ersten Zustand oder in dem zweiten Zustand betrieben wird, unterschiedlich ausgeführt sein.

Insbesondere können erste Zeitintervalle und/oder zweite Zeitintervalle unterschiedlich lang sein.

Insbesondere können in unterschiedlichen ersten und/oder zweiten Zeitintervallen unterschiedliche elektrische Leistungen bereitgestellt werden.

Insbesondere können in unterschiedlichen ersten und/oder zweiten Zeitintervallen unterschiedliche elektrische Parameter vorliegen, z. B. Frequenz, Strom, usw.

Es wird weiter eine Motoranordnung vorgeschlagen, zumindest umfassend einen elektrischen Motor, der zumindest einen Stator mit zumindest drei Spulen und einen Rotor mit zumindest zwei Magnetpolen aufweist, die beschriebene elektrische Schaltung sowie eine Steuereinrichtung zur Ansteuerung der elektrischen Schaltung, so dass der Motor mit dem beschriebenen Verfahren betreibbar ist.

Die Steuereinrichtung ist insbesondere so ausgestattet, konfiguriert oder programmiert, dass die elektrische Schaltung gemäß dem beschriebenen Verfahren betreibbar ist.

Bevorzugt ist in einer radialen Richtung zumindest innerhalb oder außerhalb zumindest des Stators ein elektrisch leitender Körper angeordnet, der zumindest bei einem Betrieb des elektrischen Motors in dem zweiten Zustand durch Induktion erwärmt wird.

Alternativ oder zusätzlich kann der Körper der Rotor sein. Der Rotor weist dazu neben den Magnetpolen ein Trägermaterial auf, das als Körper bezeichnet wird.

Insbesondere ist ein spezifischer elektrischer erster Widerstand [Ohm * Millimeter$^2$ / Meter] des Körpers niedriger ist als ein spezifischer elektrischer zweiter Widerstand eines Kerns einer Spule.

Insbesondere weist das für den Kern verwendete SMC-Material einen hohen spezifischen elektrischen Widerstand auf. Insbesondere weist der Körper (z. B. aus einem Stahl hergestellt) einen geringeren (als das für den Kern verwendete Material) spezifischen elektrischen Widerstand auf.

Insbesondere dient gerade der Körper zur Umsetzung der im zweiten Zustand bereitgestellten elektrischen Leistung in Wärme. Bevorzugt weist der Körper eine hohe elektrische und/oder magnetische Leitfähigkeit auf bzw. ist eisenhaltig ausgeführt, so dass eine effektive Erwärmung möglich ist. Insbesondere weist der Kern einer Spule eine deutlich geringere elektrische Leitfähigkeit als der Körper auf, so dass Wirbelströme im Kern unterdrückt werden. Im Hinblick auf die magnetische Leitfähigkeit können Körper und Kern insbesondere gleich oder ähnlich ausgeführt sein.

Insbesondere ist ein spezifischer elektrischer erster Widerstand um einen Faktor von mindestens zwei, bevorzugt mindestens fünf, besonders bevorzugt mindestens 10, niedriger als ein spezifischer elektrischer zweiter Widerstand.

Insbesondere weist jede Spule des Stators einen Kern auf, der sich ausgehend von einem ersten Ende hin zu einem zweiten Ende des zumindest einen Stators (insbesondere parallel zu der axialen Richtung) erstreckt, wobei der Rotor benachbart zu dem zumindest einen zweiten Ende angeordnet ist.

Der Körper erstreckt sich insbesondere entlang einer Umfangsrichtung vollumfänglich (in einer radialen Richtung innerhalb oder außerhalb der Kerne bzw. der Spulen) und entlang einer axialen Richtung (und der parallel dazu verlaufenden Drehachse) bis hin zu dem zumindest einen ersten Ende des Kerns.

Bevorzugt kontaktiert der Körper an dem zumindest einen ersten Ende die Kerne der Spulen.

Insbesondere wird über den Körper der magnetische Fluss so geleitet, dass ein möglichst hoher Anteil der elektrischen Leistung des elektrischen Motors durch den Körper in Wärme umgesetzt werden kann.

Insbesondere erstreckt sich der Körper ausgehend von einer dem ersten Stator abgewandten Stirnseite des Rotors entlang der axialen Richtung und in einer radialen Richtung innerhalb oder außerhalb der Spulen bis hin zu dem ersten Ende.

Insbesondere erstreckt sich der Körper an dem mindestens einen ersten Ende entlang der radialen Richtung bis zumindest über die Erstreckung der Kerne.

Insbesondere erstreckt sich der Körper an dem zweiten Ende entlang der radialen Richtung und entlang der von dem ersten Stator abgewandten Stirnseite des Rotors bis zumindest über die Erstreckung der Kerne (in Flucht über den Rotor).

Insbesondere ist über den elektrischen Motor eine Pumpe zur Förderung eines Fluids antreibbar, wobei in dem ersten Zustand die Pumpe (zur Förderung des Fluids) betrieben und in dem zweiten Zustand zumindest das durch die Pumpe förderbare Fluid beheizt wird.

In dem zweiten Zustand werden die Spulen mit einem gleichphasigen Wechselstrom betrieben. Es liegt dann insbesondere kein mehrphasiger Strom vor, so dass ein Antrieb des Rotors gerade nicht erfolgt. Über den Wechselstrom wird ein wechselndes Magnetfeld erzeugt, das in dem Körper über Induktion Wärme erzeugen kann.

Die Ausführungen zu der elektrischen Schaltung gelten gleichermaßen für das Verfahren und die Motoranordnung und umgekehrt.

Es wird also eine elektrische Schaltung vorgeschlagen, mit der eine elektrische Leistung für einen elektrischen Motor einerseits zum Antrieb eines Rotors (also zur Durchführung einer Drehbewegung) und andererseits zum gezielten Aufheizen eines Körpers mittels Induktion eingesetzt wird. Dabei kann der Körper auch ausschließlich beheizt und der Rotor gar nicht angetrieben werden. Dies ist insbesondere vorteilhaft für Fluide, die einfrieren können, wie z. B. Harnstoff-Wasser-Lösungen, die einen Gefrierpunkt bei ca. -11 Grad Celsius aufweisen. Durch den Körper kann damit einerseits ein in einem Tank bevorratetes Fluid aufgetaut werden und dann in zunehmendem Maße gefördert werden.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:

Fig. 1: einen elektrischen Motor in perspektivischer Ansicht, betrieben in einem ersten Zustand;

Fig. 2: einen Teil des elektrischen Motors nach Fig. 1 in perspektivischer Ansicht, betrieben in einem zweiten Zustand;

Fig. 3: eine bekannte Motoranordnung in einer ersten Darstellung;

Fig. 4: die Motoranordnung nach Fig. 3 in einer zweiten Darstellung;

Fig. 5: eine Motoranordnung in einem ersten Schaltzustand des zweiten Zustands;

Fig. 6: die Motoranordnung nach Fig. 5 in einem zweiten Schaltzustand des zweiten Zustands;

Fig. 7: eine weitere Ausführungsvariante einer Motoranordnung.

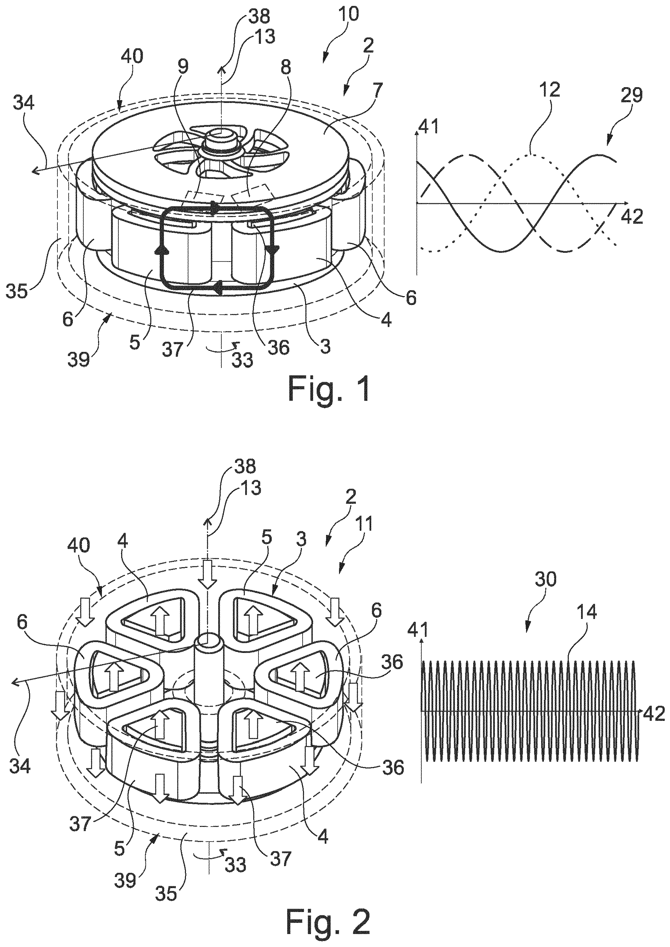

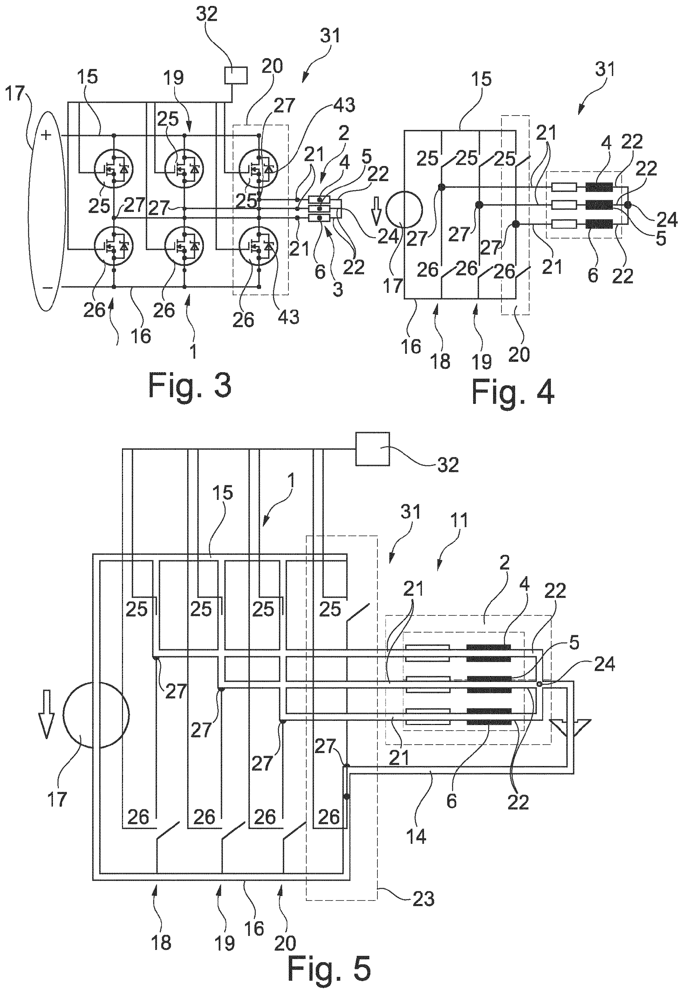

Fig. 1 zeigt einen elektrischen Motor 2 in perspektivischer Ansicht, betrieben in einem ersten Zustand 10. Der elektrische Motor 2 umfasst einen Stator 3 und einen Rotor 7. Der elektrische Motor 2 ist ein Axialflussmotor, wobei Stator 3 und Rotor 7 koaxial zueinander und entlang einer axialen Richtung 38 nebeneinander angeordnet sind. Der Rotor 7 weist entlang der Umfangsrichtung 33 abwechselnd erste Magnetpole 8 und zweite Magnetpole 9 (nicht detailliert dargestellt) auf. Der Stator 3 weist sechs Kerne 36 auf, die sich entlang der axialen Richtung 38 bzw. der Drehachse 13 erstrecken. Auf jedem Kern 36 ist jeweils eine Spule 4, 5, 6 angeordnet. Jede Spule 4, 5, 6 ist an eine elektrische Schaltung 1 (siehe Fig. 3 bis 7) elektrisch leitend angeschlossen. Die Spulen 4, 5, 6 sind entlang der Umfangsrichtung 33 in der folgenden Reihenfolge angeordnet: erste Spule 4, zweite Spule 5, dritte Spule 6, erste Spule 4 usw.

Jeder Kern 36 erstreckt sich ausgehend von einem ersten Ende 39 des Stators 3 hin zu einem zweiten Ende 40 des Stators 3, wobei der Rotor 7 benachbart zu dem zweiten Ende 40 angeordnet ist.

Ein Teil des Gehäuses des elektrischen Motors 2 bildet hier einen Körper 35. Der Körper 35 erstreckt sich entlang einer Umfangsrichtung 33 vollumfänglich (in einer radialen Richtung 34 außerhalb der Kerne 36 bzw. der Spulen 4, 5, 6) und entlang einer axialen Richtung 38 (und der parallel dazu verlaufenden Drehachse 13) ausgehend von dem zweiten Ende 40 des Stators 3 bis hin zu dem ersten Ende 39 des Stators 3. Der Körper 35 kontaktiert an dem ersten Ende 39 des Stators 3 die Kerne 36 der Spulen 4, 5, 6. Der Körper 35 erstreckt sich an dem ersten Ende 39 entlang der radialen Richtung 34 bis über die Erstreckung der Kerne 36. Der Körper 35 bildet hier einen Topf mit einem zylindrischen Abschnitt (ausgehend von dem zweiten Ende 40 bis zu dem ersten Ende 39) und einem Boden (an dem ersten Ende 39).

In Fig. 1 ist der magnetische Fluss 37 zumindest für zwei Spulen 4, 5 dargestellt, der sich bei Bestromung des elektrischen Motors 2 gemäß dem ersten Zustand 10 einstellt. In dem Diagramm der Fig. 1 sind die Verläufe der einzelnen Phasen des drei-Phasen-Drehstromsystems 12 dargestellt. Auf der vertikalen Achse ist die Stromstärke 41 aufgetragen. Auf der horizontalen Achse ist der Phasenwinkel 42 aufgetragen. Erkennbar ist die erste Frequenz 29 des drei-Phasen-Drehstromsystems 12 um ein Vielfaches geringer als die im ähnlichen aber anderen Maßstab aufgetragene zweite Frequenz 30 gemäß Fig. 2.

Fig. 2 zeigt einen Teil des elektrischen Motors 2 nach Fig. 1 in perspektivischer Ansicht, betrieben in einem zweiten Zustand 11. Auf die Ausführungen zu Fig. 1 wird verwiesen.

Hier ist der Rotor 7 nicht dargestellt. Weiter ist hier der magnetische Fluss 37 dargestellt, der sich bei Betrieb des elektrischen Motors 2 gemäß dem zweiten Zustand 11 einstellt.

In dem zweiten Zustand 11 werden die Spulen 4, 5, 6 mit einem gleichphasigen Wechselstrom beaufschlagt. Es liegt dann kein mehrphasiger Strom vor, so dass ein Antrieb des Rotors 7 gerade nicht erfolgt. Über den Wechselstrom wird ein wechselndes Magnetfeld erzeugt. Die Änderung des durch das Magnetfeld erzeugten magnetischen Flusses 37 (dB/dt) ist mit einem elektrischen Wirbelfeld (rotE) verknüpft. Infolge der schnellen Änderung des magnetischen Flusses 37 ergibt sich eine Wirbelstromdichte im Körper 35, die schließlich für die Wärmegenerierung im Körper 35 verantwortlich ist bzw. diese verursacht.

Über den Körper 35 wird der magnetische Fluss 37 so geleitet, dass ein möglichst hoher Anteil der elektrischen Leistung des elektrischen Motors 2 durch den Körper 35 in Wärme umgesetzt werden kann. Der Körper 35 leitet den magnetischen Fluss 37 ausgehend von dem zweiten Ende 40 entlang der axialen Richtung 38 bis hin zu dem ersten Ende 39 und wieder in die Kerne 36.

In dem Diagramm der Fig. 2 ist der Verlauf des Wechselstroms 14, für alle Spulen 4, 5, 6 gleich, dargestellt. Auf der vertikalen Achse ist die Stromstärke 41 aufgetragen. Auf der horizontalen Achse ist der Phasenwinkel 42 aufgetragen. Erkennbar ist die zweite Frequenz 30 des Wechselstroms 14 um ein Vielfaches höher als die im ähnlichen aber anderen Maßstab aufgetragene erste Frequenz 29 gemäß Fig. 1.

Fig. 3 zeigt eine bekannte Motoranordnung 31 in einer ersten Darstellung. Fig. 4 zeigt die Motoranordnung 31 nach Fig. 3 in einer zweiten Darstellung. Die Fig. 3 und 4 werden im Folgenden gemeinsam beschrieben. Auf die Ausführungen zu Fig. 1 und 2 wird verwiesen.

Die Motoranordnung 31 umfasst einen elektrischen Motor 2, der einen Stator 3 mit drei Spulen 4, 5, 6 und einen Rotor 7 (nicht dargestellt) aufweist, eine elektrische Schaltung 1 sowie eine Steuereinrichtung 32 (siehe Fig. 3) zur Ansteuerung der elektrische Schaltung 1, so dass der Motor 2 über die elektrische Schaltung 1 betreibbar ist.

Die bekannte elektrische Schaltung 1 zum Antrieb eines elektrischen Motors 2 umfasst einen ersten Potentialanschluss 15 und einen zweiten Potentialanschluss 16, die mit unterschiedlichen Potentialen (z. B. Pluspol und Masse) einer Gleichspannungsquelle 17 verbunden sind, wobei zwischen den Potentialanschlüssen 15, 16 drei Halbbrücken 18, 19, 20 vorgesehen sind, wobei jede Spule 4, 5, 6 des elektrischen Motors 2 über jeweils einen ersten Anschluss 21 mit jeweils einer Halbbrücke 18, 19, 20 und über jeweils einen zweiten Anschluss 22 mit den anderen Spulen 4, 5, 6 elektrisch leitend verbunden ist.

Die drei Halbbrücken 18, 19, 20 der elektrischen Schaltung 1 ermöglichen die Erzeugung eines drei-Phasen-Drehstromsystems 12, wobei die Phasen zueinander um 120 Winkelgrad versetzt sind. Jede Phase wird über jeweils einen ersten Anschluss 21 auf eine Spule 4, 5, 6 übertragen. Die Spulen 4, 5, 6 sind untereinander über zweite Anschlüsse 22 miteinander verbunden, wobei sich die unterschiedlichen Phasenströme im Sternpunkt 24 gegenseitig aufheben, so dass kein Rückleiter zum jeweils anderen Potentialanschluss 16, 15 erforderlich ist.

Eine Halbbrücke 18, 19, 20 umfasst insbesondere in bekannter Weise eine Anordnung eines oberen Transistors 25 und eines unteren Transistors 26, über die die Potentialanschlüsse 15, 16 miteinander verbunden sind. Zu jedem Transistor 25, 26 ist eine Diode 43 parallelgeschaltet. Die ersten Anschlüsse 21 sind über Kontaktierungen 27 mit der jeweiligen Halbbrücke 18, 19, 20 elektrisch leitend verbunden.

In der Darstellung der Fig.4 sind die Transistoren 25, 26 und Dioden 43 vereinfacht als Schalter dargestellt und als Transistoren 25, 26 bezeichnet. Jede Spule wird durch einen elektrischen Widerstand R und eine elektrische Induktivität L gebildet.

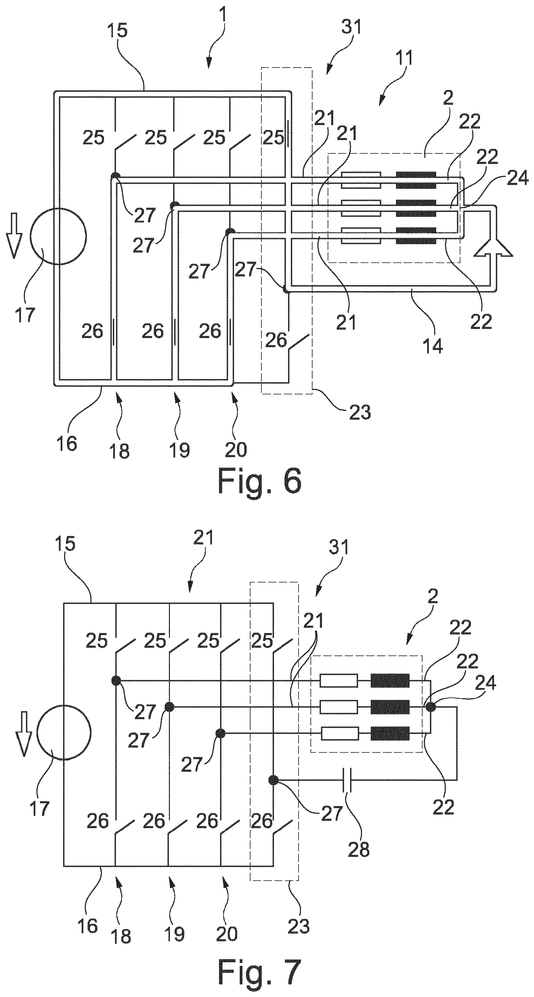

Fig. 5 zeigt eine Motoranordnung 31 in einem ersten Schaltzustand des zweiten Zustands 11. Fig. 6 zeigt eine Motoranordnung 31 in einem zweiten Schaltzustand des zweiten Zustands 11. Die Fig. 5 und 6 werden im Folgenden gemeinsam beschrieben. Auf die Ausführungen zu den Fig. 3 und 4 und insbesondere die Ausführungen zu der vereinfachten Darstellung der Halbbrücken 18, 19, 20 gemäß Fig. 4 wird Bezug genommen.

Im Unterschied zu den Motorenanordnungen 31 gemäß Fig. 3 und 4 weist die elektrische Schaltung 1 hier zwischen den Potentialanschlüssen 15, 16 eine vierte Halbbrücke 23 auf, die mit einem die zweiten Anschlüsse 22 verbindenden Sternpunkt 24 elektrisch leitend verbindbar ist.

Die Ergänzung der bekannten elektrischen Schaltung 1 durch nur eine weitere Halbbrücke 23 und durch deren Verbindung mit dem Sternpunkt 24 führt zu einer nur geringen Vergrößerung der bekannten elektrischen Schaltung 1 gemäß Fig. 3 und 4. Dabei ermöglicht diese vierte Halbbrücke 23 und ihre vorteilhafte Anordnung jedoch bereits die zusätzliche Realisierung des zweiten Zustands 11.

Jede Halbbrücke 18, 19, 20, 23 weist zumindest einen oberen Transistor 25 (highside transistor) und einen unteren Transistor 26 (low-side transistor) auf, die miteinander elektrisch leitend verbunden sind. Der obere Transistor 25 ist mit dem ersten Potentialanschluss 15 und der untere Transistor 26 mit dem zweiten Potentialanschluss 16 elektrisch leitend verbunden. Jede Halbbrücke 18, 19, 20, 23 weist zwischen dem oberen Transistor 25 und dem unteren Transistor 26 eine Kontaktierung 27 auf, über die der jeweils eine Anschluss 21, 22 mit der jeweiligen Halbbrücke 18, 19, 20, 23 verbindbar ist.

Jeder erste Anschluss 21, der am elektrischen Motor 2 angeordnet ist, ist also mit jeweils einer der ersten, zweiten und dritten Halbbrücke 18, 19, 20 über die Kontaktierung 27 elektrisch leitend verbunden. Die zweiten Anschlüsse 22 bzw. der Sternpunkt 24, die am elektrischen Motor 2 angeordnet sind, sind über die Kontaktierung 27 mit der vierten Halbbrücke 23 verbunden.

Die elektrische Schaltung 1 ist zur Erzeugung des zweiten Zustands 11 so betreibbar, dass einerseits (in einem ersten Schaltungszustand, siehe Fig. 5) die oberen Transistoren 25 der ersten Halbbrücke 18, der zweiten Halbbrücke 19 und der dritten Halbbrücke 20 synchron (also zeitlich parallel) den ersten Potentialanschluss 15 mit dem jeweiligen ersten Anschluss 21 elektrisch leitend verbinden, während die unteren Transistoren 26 dieser Halbbrücken 18, 19, 20 die jeweiligen ersten Anschlüsse 21 von dem zweiten Potentialanschluss 16 (elektrisch) trennen. Synchron dazu verbindet der untere Transistor 26 der vierten Halbbrücke 23 den zweiten Anschluss 22 mit dem zweiten Potentialanschluss 16 elektrisch leitend. Andererseits (in einem zweiten Schaltungszustand, siehe Fig. 6) verbinden die unteren Transistoren 26 der ersten Halbbrücke 18, der zweiten Halbbrücke 19 und der dritten Halbbrücke 20 synchron den zweiten Potentialanschluss 16 mit dem jeweiligen ersten Anschluss 21 elektrisch leitend, während die oberen Transistoren 25 dieser Halbbrücken 18, 19, 20 die jeweiligen ersten Anschlüsse 21 von dem ersten Potentialanschluss 15 (elektrisch) trennen. Synchron dazu verbindet der obere Transistor 25 der vierten Halbbrücke 23 den zweiten Anschluss 22 mit dem ersten Potentialanschluss 15 elektrisch leitend.

Diese Schaltungszustände werden zeitlich nacheinander realisiert.

In diesen Schaltungszuständen des zweiten Zustands 11 ist der Sternpunkt 24 über die vierte Halbbrücke 23 mit jeweils einem Potentialanschluss 15, 16 elektrisch leitend verbunden, so dass an jeder Spule 4, 5, 6 in beiden Schaltungszuständen ein elektrisches Potential vorliegt. Da die oberen oder die unteren Transistoren 25, 26 der ersten, zweiten und dritten Halbbrücke 18, 19, 20 gleichzeitig und gleichartig schalten, liegt nur ein einphasiger Strom vor. Über den Wechsel zwischen den Schaltungszuständen wird ein Wechselstrom 14 erzeugt.

Fig. 7 zeigt eine weitere Ausführungsvariante einer Motoranordnung 31. Auf die Ausführungen zu Fig. 5 und 6 wird Bezug genommen.

Im Unterschied zu Fig. 5 und 6 umfasst die elektrische Schaltung 1 einen Kondensator 28, über den der Sternpunkt 24 mit der vierten Halbbrücke 23 verbunden ist. Der Kondensator 28 ist im Betrieb des elektrischen Motors 2 zwischen Sternpunkt 24 und der vierten Halbbrücke 23 angeordnet. Der Kondensator 28 ist in einer Reihenschaltung zwischen dem elektrischen Motor 2 und der vierten Halbbrücke 23 angeordnet.

Eine Kapazität des Kondensators 28 ist in Abhängigkeit von einer Induktivität der Spulen 4, 5, 6 des Motors 2 ausgewählt, so dass bei Betreiben des Motors 2 eine Blindleistung zumindest teilweise, bevorzugt (nahezu) vollständig kompensierbar ist.

Bezugszeichenliste

| | |
|---|---|
| 1 | elektrische Schaltung |
| 2 | Motor |
| 3 | Stator |
| 4 | erste Spule |
| 5 | zweite Spule |
| 6 | dritte Spule |
| 7 | Rotor |
| 8 | erster Magnetpol |
| 9 | zweiter Magnetpol |
| 10 | erster Zustand |
| 11 | zweiter Zustand |
| 12 | drei-Phasen-Drehstromsystem |
| 13 | Drehachse |
| 14 | Wechselstrom |
| 15 | erster Potentialanschluss |
| 16 | zweiter Potentialanschluss |
| 17 | Gleichspannungsquelle |
| 18 | erste Halbbrücke |
| 19 | zweite Halbbrücke |
| 20 | dritte Halbbrücke |
| 21 | erster Anschluss |
| 22 | zweiter Anschluss |
| 23 | vierte Halbbrücke |
| 24 | Sternpunkt |
| 25 | oberer Transistor |
| 26 | unterer Transistor |
| 27 | Kontaktierung |
| 28 | Kondensator |
| 29 | erste Frequenz |
| 30 | zweite Frequenz |
| 31 | Motoranordnung |
| 32 | Steuereinrichtung |
| 33 | Umfangsrichtung |
| 34 | radiale Richtung |
| 35 | Körper |
| 36 | Kern |
| 37 | magnetischer Fluss |
| 38 | axiale Richtung |
| 39 | erstes Ende |
| 40 | zweites Ende |
| 41 | Stromstärke |
| 42 | Phasenwinkel |
| 43 | Diode |

**Patentansprüche**

1. Elektrische Schaltung (1) für einen elektrischen Motor (2), wobei der elektrische Motor (2) zumindest einen Stator (3) mit zumindest drei Spulen (4, 5, 6) und einen Rotor (7) mit zumindest zwei Magnetpolen (8, 9) aufweist; wobei der Motor (2) durch die elektrische Schaltung (1) zumindest in den folgenden zwei Zuständen (10, 11) betreibbar ist:

a) in einem ersten Zustand (10) sind die Spulen (4, 5, 6) mit jeweils unterschiedlichen Strömen eines drei-Phasen-Drehstromsystems (12) beaufschlagbar und der Rotor (7) in Drehung um eine Drehachse (13) versetzbar;

b) in einem zweiten Zustand (11) sind die Spulen (4, 5, 6) mit einem gleichphasigen Wechselstrom (14) beaufschlagbar;

wobei die elektrische Schaltung (1) zumindest einen ersten Potentialanschluss (15) und einen zweiten Potentialanschluss (16) aufweist, die mit unterschiedlichen Potentialen einer Gleichspannungsquelle (17) verbindbar sind; wobei die elektrische Schaltung (1) zwischen den Potentialanschlüssen (15, 16) drei Halbbrücken (18, 19, 20) umfasst, wobei jede Spule (4, 5, 6) über jeweils einen ersten Anschluss (21) mit jeweils einer Halbbrücke (18, 19, 20) und über jeweils einen zweiten Anschluss (22) mit den anderen Spulen (4, 5, 6) elektrisch leitend verbindbar ist; wobei die elektrische Schaltung (1) zwischen den Potentialanschlüssen (15, 16) eine vierte Halbbrücke (23) aufweist, die mit einem die zweiten Anschlüsse (22) verbindenden Sternpunkt (24) elektrisch leitend verbindbar ist; wobei jede Halbbrücke (18, 19, 20, 23) zumindest einen oberen Transistor (25) und einen unteren Transistor (26) aufweist, die miteinander elektrisch leitend verbunden sind; wobei der obere Transistor (25) mit dem ersten Potentialanschluss (15) und der untere Transistor (26) mit dem zweiten Potentialanschluss (16) elektrisch leitend verbunden ist; wobei jede Halbbrücke (18, 19, 20, 23) zwischen dem oberen Transistor (25) und dem unteren Transistor (26) eine Kontaktierung (27) aufweist, über die der jeweils eine Anschluss (21, 22) mit der jeweiligen Halbbrücke (18, 19, 20, 23) verbindbar ist;

**gekennzeichnet dadurch dass**

die elektrische Schaltung (1) zur Erzeugung des zweiten Zustands (11) so betreibbar ist, dass einerseits die oberen Transistoren (25) der ersten Halbbrücke (18), der zweiten Halbbrücke (19) und der dritten Halbbrücke (20) synchron den ersten Potentialanschluss (15) mit dem jeweiligen ersten Anschluss (21) elektrisch leitend verbinden während die unteren Transistoren (26) dieser Halbbrücken (18, 19, 20) die jeweiligen ersten Anschlüsse (21) von dem zweiten Potentialanschluss (16) trennen; wobei synchron dazu der untere Transistor (26) der vierten Halbbrücke (23) den zweiten Anschluss (22) mit dem zweiten Potentialanschluss (16) elektrisch leitend verbindet; und dass andererseits die unteren Transistoren (26) der ersten Halbbrücke (18), der zweiten Halbbrücke (19) und der dritten Halbbrücke (20) synchron den zweiten Potentialanschluss (16) mit dem jeweiligen ersten Anschluss (21) elektrisch leitend verbinden während die oberen Transistoren (25) dieser Halbbrücken (18, 19, 20) die jeweiligen ersten Anschlüsse (21) von dem ersten Potentialanschluss (15) trennen; wobei synchron dazu der obere Transistor (25) der vierten Halbbrücke (23) den zweiten Anschluss (22) mit dem ersten Potentialanschluss (15) elektrisch leitend verbindet; wobei die elektrische Schaltung mindestens einen Kondensator (28) aufweist, über den der Sternpunkt (24) mit der vierten Halbbrücke (23) verbindbar ist.

2. Elektrische Schaltung (1) nach Patentanspruch 1, wobei eine Kapazität des mindestens einen Kondensators (28) in Abhängigkeit von einer Induktivität der Spulen (4, 5, 6) des Motors (2) ausgewählt ist, so dass bei Betreiben des Motors (2) eine Blindleistung zumindest teilweise kompensierbar ist.

3. Verfahren zum Betreiben eines elektrischen Motors (2) mit einer elektrischen Schaltung (1) nach einem der vorhergehenden Patentansprüche; wobei der Motor (2) zur Erzeugung des ersten Zustands (10) ausschließlich über die erste Halbbrücke (18), die zweite Halbbrücke (19) und die dritte Halbbrücke (20) betrieben wird.

4. Verfahren nach Patentanspruch 3, wobei während des ersten Zustands (10) der Sternpunkt (24) über die vierte Halbbrücke (23) nur mit einem Potentialanschluss (15, 16) elektrisch leitend verbunden ist oder von beiden Potentialanschlüssen (15, 16) getrennt ist.

5. Verfahren nach einem der vorhergehenden Patentansprüche 3 und 4, wobei jede Halbbrücke (18, 19, 20, 23) zumindest einen oberen Transistor (25) und einen unteren Transistor (26) aufweist, die miteinander elektrisch leitend verbunden sind; wobei der obere Transistor (25) mit dem ersten Potentialanschluss (15) und der untere Transistor (26) mit dem zweiten Potentialanschluss (16) elektrisch leitend verbunden ist; wobei jede Halbbrücke (18, 19, 20, 23) zwischen dem oberen Transistor (25) und dem unteren Transistor (26) eine Kontaktierung (27) aufweist, über die der jeweils eine Anschluss (21, 22) mit der jeweiligen Halbbrücke (18, 19, 20, 23) verbunden ist; wobei zur Erzeugung des zweiten Zustands (11)

   • einerseits die oberen Transistoren (25) der ersten Halbbrücke (18), der zweiten Halbbrücke (19) und der dritten Halbbrücke (20) synchron geschaltet werden und den ersten Potentialanschluss (15) mit dem jeweiligen ersten Anschluss (21) elektrisch leitend verbinden, während die unteren Transistoren (26) dieser Halbbrücken (18, 19, 20) die jeweiligen ersten Anschlüsse (21) von dem zweiten Potentialanschluss (16) trennen; wobei synchron dazu der untere Transistor (26) der vierten Halbbrücke (23) geschaltet wird zur Verbindung des zweiten Anschlusses (22) mit dem zweiten Potentialanschluss (16); und

• andererseits die unteren Transistoren (26) der ersten Halbbrücke (18), der zweiten Halbbrücke (19) und der dritten Halbbrücke (20) synchron geschaltet werden und den zweiten Potentialanschluss (16) mit dem jeweiligen ersten Anschluss (21) elektrisch leitend verbinden während die oberen Transistoren (25) dieser Halbbrücken (18, 19, 20) die jeweiligen ersten Anschlüsse (21) von dem ersten Potentialanschluss (15) trennen; wobei synchron dazu der obere Transistor (25) der vierten Halbbrücke (23) geschaltet wird zur Verbindung des zweiten Anschlusses (22) mit dem ersten Potentialanschluss (16).

6.  Verfahren nach einem der vorhergehenden Patentansprüche 3 bis 5, wobei eine erste Frequenz (29) des Drehstroms (12) höchstens 50 % einer zweiten Frequenz (30) des Wechselstroms (14) aufweist.

7.  Verfahren nach einem der vorhergehenden Patentansprüche 3 bis 6, wobei eine im zweiten Zustand (11) durch die elektrische Schaltung (1) erzeugbare höchste Heizleistung mindestens 50 % einer im ersten Zustand (10) durch die elektrische Schaltung (1) erzeugbaren Antriebsleistung beträgt.

8.  Verfahren nach einem der vorhergehenden Patentansprüche 3 bis 7, wobei die elektrische Schaltung (1) in voneinander unterschiedlichen Zeitintervallen entweder zur Erzeugung des ersten Zustands (10) oder zur Erzeugung des zweiten Zustands (11) betrieben wird.

9.  Verfahren nach Patentanspruch 8, wobei eine Umschaltung zwischen den Zeitintervallen in einer dritten Frequenz von mehr als ein Hz erfolgt.

10. Motoranordnung (31), zumindest umfassend einen elektrischen Motor (2), der zumindest einen Stator (3) mit zumindest drei Spulen (4, 5, 6) und einen Rotor (7) mit zumindest zwei Magnetpolen (8, 9) aufweist, eine elektrische Schaltung (1) nach einem der vorhergehenden Patentansprüche 1 und 2 sowie eine Steuereinrichtung (32) zur Ansteuerung der elektrische Schaltung (1), so dass der Motor (2) mit einem Verfahren nach einem der vorhergehenden Patentansprüche 3 bis 9 betreibbar ist.

## Claims

1.  Electric circuit (1) for an electric motor (2), wherein the electric motor (2) has at least one stator (3) with at least three coils (4, 5, 6) and one rotor (7) with at least two magnetic poles (8, 9); wherein the motor (2) can be operated by the electric circuit (1) at least in the following two states (10, 11):

    a) in a first state (10), respectively different currents of a three-phase system (12) can be applied to the coils (4, 5, 6) and the rotor (7) can be caused to rotate about an axis of rotation (13);
    b) in a second state (11), an in-phase alternating current (14) can be applied to the coils (4, 5, 6);

    wherein the electric circuit (1) has at least one first potential connection (15) and one second potential connection (16) which can be connected to different potentials of a DC voltage source (17), wherein the electric circuit (1) comprises three half-bridges (18, 19, 20) between the potential connections (15, 16), wherein each coil (4, 5, 6) can be connected in an electrically conductive manner to one half-bridge (18, 19, 20) in each case via one first connection (21) in each case and can be connected in an electrically conductive manner to the other coils (4, 5, 6) via one second connection (22) in each case; wherein the electric circuit (1) has a fourth half-bridge (23) between the potential connections (15, 16), which fourth half-bridge can be connected in an electrically conductive manner to a star point (24) connecting the second connections (22); wherein each half-bridge (18, 19, 20, 23) has at least one upper transistor (25) and one lower transistor (26) which are connected to one another in an electrically conductive manner; wherein the upper transistor (25) is connected in an electrically conductive manner to the first potential connection (15) and the lower transistor (26) is connected in an electrically conductive manner to the second potential connection (16); wherein each half-bridge (18, 19, 20, 23) has a contact-connection (27) between the upper transistor (25) and the lower transistor (26), which contact-connection can be used to connect the respective one connection (21, 22) to the respective half-bridge (18, 19, 20, 23); **characterized in that** the electrical circuit (1), in order to produce the second state (11), can be operated in such a manner that, on the one hand, the upper transistors (25) of the first half-bridge (18), of the second half-bridge (19) and of the third half-bridge (20) synchronously connect the first potential connection (15) to the respective first connection (21) in an electrically conductive manner, while the lower transistors (26) of these half-bridges (18, 19, 20) disconnect the respective first connections (21) from the second potential connection (16); wherein, in sync with this, the lower transistor (26) of the fourth half-bridge (23) connects the second connection (22) to the second potential connection (16) in an electrically conductive manner; and that, on the other hand, the lower transistors (26) of the first half-bridge (18), of the second half-bridge (19) and of the third half-bridge (20) synchronously connect the second potential connection (16) to the respective first connection (21) in an electrically conductive manner, while the upper transistors (25) of these half-bridges (18, 19, 20) disconnect the respective first connections (21) from the first potential connection (15); wherein, in sync with this, the upper transistor (25) of the fourth half-bridge (23) connects the second connection (22) to the first potential connection (15) in an electrically conductive manner; wherein the electrical circuit (1) has at least one capacitor (28) which can be used to connect the star point (24) to the fourth half-bridge (23).

2. Electric circuit (1) according to claim 1, wherein a capacitance of the at least one capacitor (28) is selected on the basis of an inductance of the coils (4, 5, 6) of the motor (2), such that a reactive power can be at least partially compensated for during operation of the motor (2).

3. Method for operating an electric motor (2) using an electric circuit (1) according to one of the preceding claims; wherein, in order to produce the first state (10), the motor (2) is operated solely via the first half-bridge (18), the second half-bridge (19) and the third half-bridge (20).

4. Method according to claim 3, wherein the star point (24) is connected only to one potential connection (15, 16) in an electrically conductive manner via the fourth half-bridge (23) or is disconnected from both potential connections (15, 16) during the first state (10).

5. Method according to either of the preceding claims 3 and 4, wherein each half-bridge (18, 19, 20, 23) has at least one upper transistor (25) and one lower transistor (26) which are connected to one another in an electrically conductive manner; wherein the upper transistor (25) is connected to the first potential connection (15) in an electrically conductive manner and the lower transistor (26) is connected to the second potential connection (16) in an electrically conductive manner; wherein each half-bridge (18, 19, 20, 23) has a contact-connection (27) between the upper transistor (25) and the lower transistor (26), which contact-connection is used to connect the respective one connection (21, 22) to the respective half-bridge (18, 19, 20, 23); wherein, in order to produce the second state (11),

    • on the one hand, the upper transistors (25) of the first half-bridge (18), of the second half-bridge (19) and of the third half-bridge (20) are synchronously switched and connect the first potential connection (15) to the respective first connection (21) in an electrically conductive manner, while the lower transistors (26) of these half-bridges (18, 19, 20) disconnect the respective first connections (21) from the second potential connection (16); wherein, in sync with this, the lower transistor (26) of the fourth half-bridge (23) is switched for the purpose of connecting the second connection (22) to the second potential connection (16); and
    • on the other hand, the lower transistors (26) of the first half-bridge (18), of the second half-bridge (19) and of the third half-bridge (20) are synchronously switched and connect the second potential connection (16) to the respective first connection (21) in an electrically conductive manner, while the upper transistors (25) of these half-bridges (18, 19, 20) disconnect the respective first connections (21) from the first potential connection (15); wherein, in sync with this, the upper transistor (25) of the fourth half-bridge (23) is switched for the purpose of connecting the second connection (22) to the first potential connection (16).

6. Method according to one of the preceding claims 3 to 5, wherein a first frequency (29) of the three-phase current (20) is at most 50% of a second frequency (30) of the alternating current (14).

7. Method according to one of the preceding claims 3 to 6, wherein a maximum heating power that can be produced by the electric circuit (1) in the second state (11) is at least 50% of a drive power that can be produced by the electric circuit (1) in the first state (10).

8. Method according to one of the preceding claims 3 to 7, wherein the electric circuit (1) is operated either to produce the first state (10) or to produce the second state (11) in intervals of time which differ from one another.

9. Method according to claim 8, wherein there is a changeover between the intervals of time at a third frequency of more than one Hz.

10. Motor arrangement (31) at least comprising an electric motor (2) which has at least one stator (3) with at least three coils (4, 5, 6) and one rotor (7) with at least two magnetic poles (8, 9), an electric circuit (1) according to one of the preceding claims 1 and 2 and a control device (32) for controlling the electric circuit (1) such that the motor (2) can be operated with a method according to one of the preceding claims 3 to 9.

## Revendications

1. Circuit électrique (1) pour un moteur électrique (2), le moteur électrique (2) comportant au moins un stator (3) avec au moins trois bobines (4, 5, 6) et un rotor (7) avec au moins deux pôles magnétiques (8, 9) ; le moteur (2) pouvant fonctionner au moyen du circuit électrique (1) au moins dans les deux états (10, 11) suivants :

   a) dans un premier état (10), les bobines (4, 5, 6) peuvent chacune être alimentées par des courants différents d'un système de courant triphasé (12) et le rotor (7) peut être mis en rotation autour d'un axe de rotation (13) ;
   b) dans un deuxième état (11), les bobines (4, 5, 6) peuvent être alimentées par un courant alternatif en phase (14) ;
   le circuit électrique (1) comportant au moins une première borne de potentiel (15) et une deuxième borne de potentiel (16), qui peuvent être reliées à des potentiels différents d'une source de tension continue (17) ; le circuit électrique (1) comprenant trois demi-ponts (18, 19, 20) entre les bornes de potentiel (15, 16), chaque bobine (4, 5, 6) pouvant être connectée de manière électroconductrice par une première connexion (21) à un demi-pont (18, 19, 20) respectif et par une deuxième connexion (22) respective aux autres bobines (4, 5, 6) ; le circuit électrique (1) comportant, entre les bornes de potentiel (15, 16), un quatrième demi-pont (23) qui peut être connecté de manière électroconductrice à un point d'étoile (24) reliant les deuxièmes bornes (22) ; chaque demi-pont (18, 19, 20, 23) comportant au moins un transistor supérieur (25) et un transistor inférieur (26) qui sont connectés l'un à l'autre de manière électroconductrice ; le transistor supérieur (25) étant connecté de manière électroconductrice à la première borne de potentiel (15) et le transistor inférieur (26) étant connecté de manière électroconductrice à la deuxième borne de potentiel (16) ; chaque demi-pont (18, 19, 20, 23) comportant, entre le transistor supérieur (25) et le transistor inférieur (26), un contact (27) par l'intermédiaire duquel l'une des bornes (21, 22) peut être connectée au demi-pont (18, 19, 20, 23) correspondant ;
   **caractérisé en ce que**
   le circuit électrique (1), pour générer le deuxième état (11), peut être utilisé de telle sorte que, d'une part, les transistors supérieurs (25) du premier demi-pont (18), du deuxième demi-pont (19) et du troisième demi-pont (20) connectent de manière électroconductrice et synchrone la première borne de potentiel (15) à la première borne (21) respective, tandis que les transistors inférieurs (26) de ces demi-ponts (18, 19, 20) séparent les premières bornes (21) respectives de la deuxième borne de potentiel (16) ; le transistor inférieur (26) du quatrième demi-pont (23) connectant en synchronisme avec cela et de manière électroconductrice la deuxième borne (22) à la deuxième borne de potentiel (16) ; et **en ce que**, d'autre part, les transistors inférieurs (26) du premier demi-pont (18), du deuxième demi-pont (19) et du troisième demi-pont (20) connectent en synchronisme avec cela et de manière électroconductrice la deuxième borne de potentiel (16) à la première borne (21) respective, tandis que les transistors supérieurs (25) de ces demi-ponts (18, 19, 20) séparent les premières bornes (21) respectives de la première borne de potentiel (15) ; le transistor supérieur (25) du quatrième demi-pont (23) connectant en synchronisme avec cela et de manière électroconductrice la deuxième borne (22) à la première borne de potentiel (15) ; le circuit électrique comportant au moins un condensateur (28) par l'intermédiaire duquel le point neutre (24) peut être connecté au quatrième demi-pont (23).

2. Circuit électrique (1) selon la revendication 1, dans lequel une capacité dudit au moins un condensateur (28) est sélectionnée en fonction d'une inductance des bobines (4, 5, 6) du moteur (2), de telle sorte qu'une puissance réactive puisse être au moins partiellement compensée lors du fonctionnement du moteur (2).

3. Procédé de fonctionnement d'un moteur électrique (2) comprenant un circuit électrique (1) selon l'une quelconque des revendications précédentes ; le moteur (2) étant destiné à générer le premier état (10) exclusivement par l'intermédiaire du premier demi-pont (18), du deuxième demi-pont (19) et du troisième demi-pont (20).

4. Procédé selon la revendication 3, dans lequel, pendant le premier état (10), le point neutre (24) est connecté de manière électroconductrice par l'intermédiaire du quatrième demi-pont (23) uniquement à une borne de potentiel (15, 16) ou est séparé des deux bornes de potentiel (15, 16).

5. Procédé selon l'une quelconque des revendications 3 et 4 précédentes, dans lequel chaque demi-pont (18, 19, 20, 23) comporte au moins un transistor supérieur (25) et un transistor inférieur (26) qui sont connectés l'un à l'autre de manière électroconductrice ; le transistor supérieur (25) étant connecté de manière électroconductrice à la première borne de potentiel (15) et le transistor inférieur (26) étant connecté de manière électroconductrice à la deuxième borne de potentiel (16) ; chaque demi-pont (18, 19, 20, 23) comportant, entre le transistor supérieur (25) et le transistor inférieur (26), un contact (27) par l'intermédiaire duquel l'une des bornes (21, 22) est connectée au demi-pont (18, 19, 20, 23) respectif ; dans lequel, pour générer le deuxième état (11)

• d'une part, les transistors supérieurs (25) du premier demi-pont (18), du deuxième demi-pont (19) et du troisième demi-pont (20) sont commutés de manière synchrone et connectent de manière électroconductrice la première borne de potentiel (15) à la première borne (21) respective, tandis que les transistors inférieurs (26) de ces demi-ponts (18, 19, 20) séparent les premières bornes (21) respectives de la deuxième borne de potentiel (16) ; le transistor inférieur (26) du quatrième demi-pont (23), en synchronisme avec cela, étant commuté pour connecter la deuxième borne (22) à la deuxième borne de potentiel (16) ; et
• d'autre part, les transistors inférieurs (26) du premier demi-pont (18), du deuxième demi-pont (19) et du troisième demi-pont (20) sont commutés de manière synchrone et connectent de manière électroconductrice la deuxième borne de potentiel (16) à la première borne (21) respective, tandis que les transistors supérieurs (25) de ces demi-ponts (18, 19, 20) séparent les premières bornes (21) respectives de la première borne de potentiel (15) ; le transistor supérieur (25) du quatrième demi-pont (23), en synchronisme avec cela, étant commuté pour connecter la deuxième borne (22) à la première borne de potentiel (16).

6. Procédé selon l'une quelconque des revendications 3 à 5 précédentes, dans lequel une première fréquence (29) du courant triphasé (12) représente au plus 50 % d'une deuxième fréquence (30) du courant alternatif (14).

7. Procédé selon l'une quelconque des revendications précédentes 3 à 6, dans lequel une puissance de chauffage maximale pouvant être générée dans le deuxième état (11) par le circuit électrique (1) représente au moins 50 % d'une puissance d'entraînement pouvant être générée dans le premier état (10) par le circuit électrique (1).

8. Procédé selon l'une quelconque des revendications précédentes 3 à 7, dans lequel le circuit électrique (1) est utilisé à des intervalles de temps différents les uns des autres, soit pour générer le premier état (10), soit pour générer le deuxième état (11).

9. Procédé selon la revendication 8, dans lequel une commutation entre les intervalles de temps est effectuée à une troisième fréquence supérieure à un Hz.

10. Ensemble moteur (31) comprenant au moins un moteur électrique (2) qui comporte au moins un stator (3) avec au moins trois bobines (4, 5, 6) et un rotor (7) avec au moins deux pôles magnétiques (8, 9), un circuit électrique (1) selon l'une quelconque des revendications 1 et 2 précédentes et un dispositif de commande (32) pour commander le circuit électrique (1), de telle sorte que le moteur (2) peut être mis en fonctionnement par un procédé selon l'une quelconque des revendications 3 à 9 précédentes.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019170738 A1
- DE 102018104418 A1
- WO 02071809 A1
- WO 2016066714 A1